# EUROPEAN PATENT SPECIFICATION

(11) **EP 3 572 677 B1**
(45) Date of publication and mention of the grant of the patent: **02.10.2024**
(21) Application number: 18174281.8
(22) Date of filing: 25.05.2018
(51) Int. Cl.: F16B 5/07, E04F 13/08, F16B 15/00

(54) **FASTENER, FASTENING SYSTEM AND METHOD FOR THE INSTALLATION OF BUILDING BOARD OR INTERIOR PANEL ON WALL OR CEILING**
BEFESTIGUNGSELEMENT, BEFESTIGUNGSSYSTEM UND VERFAHREN ZUR INSTALLATION VON BAUPLATTE ODER INNENVERKLEIDUNG AUF WAND ODER DECKE
ATTACHE, SYSTÈME DE FIXATION ET PROCÉDÉ DE MONTAGE DE PANNEAU DE CONSTRUCTION OU DE PANNEAU INTÉRIEUR SUR UN MUR OU UN PLAFOND

(43) Date of publication of application: 27.11.2019
(73) Proprietor: FennoMIL Oy, 31300 Tammela (FI)
(72) Inventor: Poranen, Taneli, 20100 Turku (FI)
(74) Representative: Genip Oy

(56) References cited:
- EP-A1- 2 998 458
- FR-A1- 2 566 849
- GB-A- 831 824
- KR-A- 20150 012 391
- US-A- 4 448 004

## Description

### Field of invention

The invention is related to the installation of building boards and interior panels on a wall or ceiling and to the fasteners and fastening systems used for this.

### Technical background

Building boards and interior panels are fastened on a wall or ceiling by using a mechanical or chemical fastening method.

The fastening is currently implemented by nailing or screwing a building board or interior panel onto a wall or ceiling. A building board or interior panel can be fastened on a wooden wall by means of nails or screws. In a concrete or gypsum wall, it is usually necessary to use some type of a wall fastener, such as a screw anchor, so that the screw would stay on the wall. A fastening hole is drilled for the screw anchor in the wall or ceiling, and the screw anchor is installed in the fastening hole. The screw anchor expands in the lateral direction when the fastening screw penetrates into the screw anchor, and at the same time locks, together with potential barbs in the screw anchor, the screw anchor in the fastening hole.

In this way, nail holes or screw holes remain visible on the surface of the building board or interior panel, which holes may pose an aesthetic problem in some situations. Moreover, nails or screws are not only loud but also relatively slow to install, because alignment has to be done at the same time as when the board or panel is being installed. It is often difficult to move a board or panel again using the same fastening holes, which means that the board or panel may become worn when moved. The dimension required from the fasteners is often different in different applications. It may be difficult to ensure the necessary installation tightness of the board or panel, which is why the acoustic properties of an installed building board or interior panel may vary from one board or panel to another, as a result of which it may be difficult to control the acoustics of the entire room or space. Moreover, especially when installed on a ceiling, a relatively large number of fasteners are needed.

A prior art document FR 2566849 discloses a device for assembling any two elements, which device is composed of two self-locking mutually interlocking assembly members able to be securely fastened respectively to the two elements to be assembled, these assembly members consisting of two profiled plates P1, P2 in complementary shapes, at least one of which has blind slits 9, 10; 9a, 10a so as to be able to be interlocked by sliding into the other, and which are both provided with contact surfaces 4, 5, 6, 11; 4a, 5a, 6a, 11a able to come to mutually bear after interlocking the plates. Application especially to assembling two construction elements such as wooden beams or panels, in the context of constructing verandas.

A prior art document GB 831824 discloses a mounting device comprising a channelled rigid plate having a tongue 5 formed as a longitudinal extension of the channel base 4, the tongue having an offset disposition with respect to co-planar cheek portions 2 of the plate, which exist at the sides of the channel, the plate being adapted for the attaching of the same to an article or structure. As shown, the cheek portions 2 are formed with extensions 6, and two such plates are used with an interengaging action for securing together two parts to which they are respectively attached. The plates may be secured by the cheek portions 2, 6 or their tongues 5.

A prior art document KR 20150012391 relates to the fixing of panel outlet and panel construction method. And more specifically, panel is adhered to the lower panel to the mode laminating the upper panel. The bond construction is a first and a second fixing device installed at each panel each other combine female and male and goes with panel is steadily accomplished and the bond is formed in the structure where first and second fixing device from side to side move. Therefore the upper panel is related to the fixing of panel outlet and the panel construction method which it precisely arranges on the lower panel fixed to wall in bond.

A prior art document US4448004 discloses a removeable partition wall system including a vertical stud member 1 supporting a horizontal support member 2. A gypsum wall panel 3 is suspended from the support member 2 by means of a plurality of suspension assemblies 4 affixed to the rear face of the panel 3. The stud member 1 is preferably a C-shaped steel channel having a web portion 5, perpendicular to the suspended panel 3, and a pair of spaced side walls 6 parallel to the panel 3. The web portion 5 is formed to provide a cut-out 7 through which the support member 2 is inserted.

A prior art document EP 2998458 discloses a fastening system for fastening a plate (41), in particular an entire one-piece facade, to an anchoring base (40), for example a house wall, comprises holding elements (1) and support elements (10) arranged on the anchoring base (40) and on the plate to be fastened (41) arranged anchor elements (18) and / or contact elements (19). The weight of the plate (41) is borne by the holding elements (1). For this purpose, the mushroom-like extensions (20) of the anchor elements (18) are suspended in the V-like slots (2) of the holding elements. Typically, support elements (10) are placed in the lower area of the anchoring base (40), on which contact elements (19) are placed. As a result, the plate (41) has the same distance from the anchoring base (40) everywhere. However, anchor elements (18) can also be hung in the V-like slots (11) of the support elements (10). However, the combination of support element (10) and anchor element (18) does not bear the weight of the plate (41), since the mushroom-like extension (20) of the anchor element (18) does not rest on the end of the V-like slot (11) of the support element ( 10) rests. Hanging the anchor element (18) in a support element (10) serves to secure the plate (41) against wind pressure and wind suction.

In addition to this or instead of this, the building boards or interior panels can be fastened chemically, in other words in practice by using a suitable adhesive, on a wall or ceiling.

Various chemicals may be released to the air from the adhesive. The installation is also largely non-reversible: a building board, interior panel and/or in the worst case also the installation base is ruined after the detachment of the board or panel. Moreover, the board or panel cannot be transferred after installation, which is why new building boards or interior panels are needed in the next apartment or building after moving in. The adhesiveness of the adhesive may vary as the properties of the installation surface vary, for example due to greasiness in restaurant environments. The installation surface also has to be straight so that installation would be accurate. The cross dimension of the board or panel may change if there are dents or protrusions in the base.

Boards or panels of different sizes, weights and thicknesses require a varying adhesive application pattern. Excessive adhesive may bring down a board or panel due to its weight. The adhesion of water and solvents may shift the centre of mass in the board or panel away from the installation surface.

### Objective of invention

The objective of the invention is to simplify the installation of an interior panel or building board on a wall or ceiling. This objective can be solved by means of a fastener according to claim 1, a fastening system according to parallel claim 9 and a method according to claim 11.

The dependent claims describe the advantageous embodiments of the fastener, fastening system and method.

### Advantages of invention

The fastener comprises two basic parts and one raising part, and a slot remains between these. At least one fastener is fastened to an interior panel or building board at the location of the basic part using spikes or bond teeth in the basic part.

Similarly, a corresponding number of fasteners are fastened on a wall or ceiling, most advantageously by using fastening holes and/or fastening elements such as spikes or bond teeth in the basic part, by gluing or by a combination of these. After this, the raising part of the fasteners fastened to the building board or interior panel is installed against the raising part of the fasteners fastened on the wall or ceiling by sliding them against each other so that the slots in both fasteners go inside one another.

The fastener has two basic parts, and they are on the opposite sides of the raising part. A slot has been arranged between both basic parts and the raising part. The arrangement of the basic parts on the opposite sides of the raising parts facilitates the balanced fastening of the fastener, in which case it is possible to better control the torsional moment caused by the strain resulting from the raising part. The opposite slots enable the sliding of the raising parts against each other so that the slots are taken one inside the other. Both slots most advantageously have a bevel.

When the raising part comprises at least one suspension hole, such as a hole with the shape of a "key hole", in other words most preferably a round or oval hole, which has a rectangular protrusion or a protrusion with rounded edges, it is possible to use the raising part for the suspension of a building board or interior panel fastened to a fastener, in a way like a painting. The raising part most advantageously comprises at least one arrester. The arrester can be implemented as at least one edge squaring of a punched hole. By means of the arrester, the fasteners placed against each other do not slide away from their places so easily when the fastening system is used for the installation of building boards or interior panels. In one direction, the slots placed against each other ensure a form-restricted locking, but in the other direction there would not otherwise necessarily be any locking whatsoever.

The fastener most advantageously has a wall between the basic part and the raising part. The wall most advantageously restricts the slot. In other words, the slot may be formed between the basic part and the raising part. By means of a suitable wall height, the building boards or interior panels can be installed to a desired distance from a wall or ceiling. In this way, it is possible to influence the acoustic properties achieved with the building boards or interior panels, and the desired clearance between surfaces. On the other hand or in addition to this, it is possible to eliminate the impact of an uneven wall or ceiling on the installation of building boards or interior panels. The wall height has most advantageously been selected so that the wall height (H) of fasteners installed against each other is between 8 - 30 mm, most advantageously 10 - 20 mm.

The basic part can contain a number of gluing holes. In this way, the fastening of a fastener to a building board, interior panel, wall or ceiling can be implemented by means of a chemical fastening method (gluing) in addition to or alongside mechanical fastening.

The fastener has most advantageously been manufactured from a single sheet metal piece by using sheet metal working methods, for example from steel sheet. The manufacture can be implemented easily by using for example a sheet metal working machine.

A fastener according to the invention a further comprises a number of spikes or bond teeth that extend below the basic part. The spikes or bond teeth can be implemented easily as an extension of the wall, for example by machining them from the same sheet as the fastener by using a sheet metal working machine. Such a fastener is especially well suited to be fastened to a porous board or installation surface.

The lower side of the basic part of a fastener of a second type is essentially even, in other words it does not have spikes or bond teeth that extend below the basic part. There are fastening holes in the basic part.

In the fastening system, two fasteners are installable to each other by sliding the raising parts of opposite fasteners, which are to be placed against each other, against each other so that the slots go one inside the other. When the dimensions have been selected suitably, it is not only possible to install a fastener according to the invention to a fastener of a second type, but also two fasteners according to the invention or two fasteners of a second type can be installed to each other.

The fasteners and fastening systems are especially well suited to the installation of porous boards, such as peat boards or for example moulded and pressed products described in the Finnish patent FI 122883 or boards described in the same applicant's European patent application publication EP3100836 A2.

### List of drawings

The fastener, fastening system and method are presented below by describing in more detail a fastener according to the invention presented in FIG 1 - 4, a fastener of a second type presented in FIG 5 - 8 that is suited to a fastener according to the invention, and a fastening system presented in FIG 9 - 14 that has been formed by assembling together said fastener according to the invention and fastener of a second type. Of the drawings:

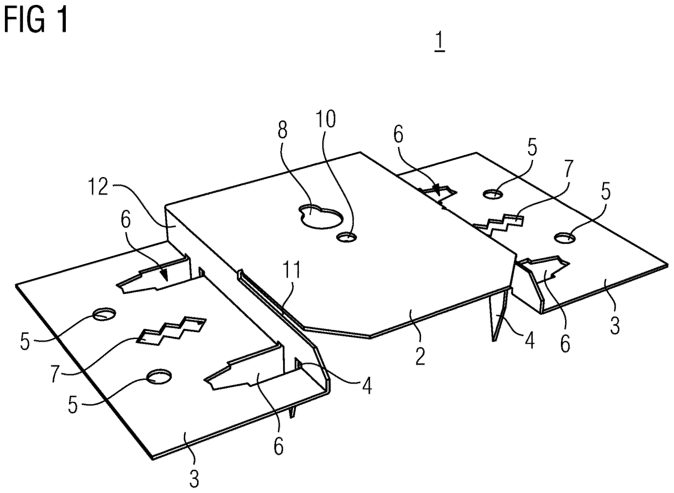

- FIG 1: shows a fastener according to the invention viewed in a perspective;

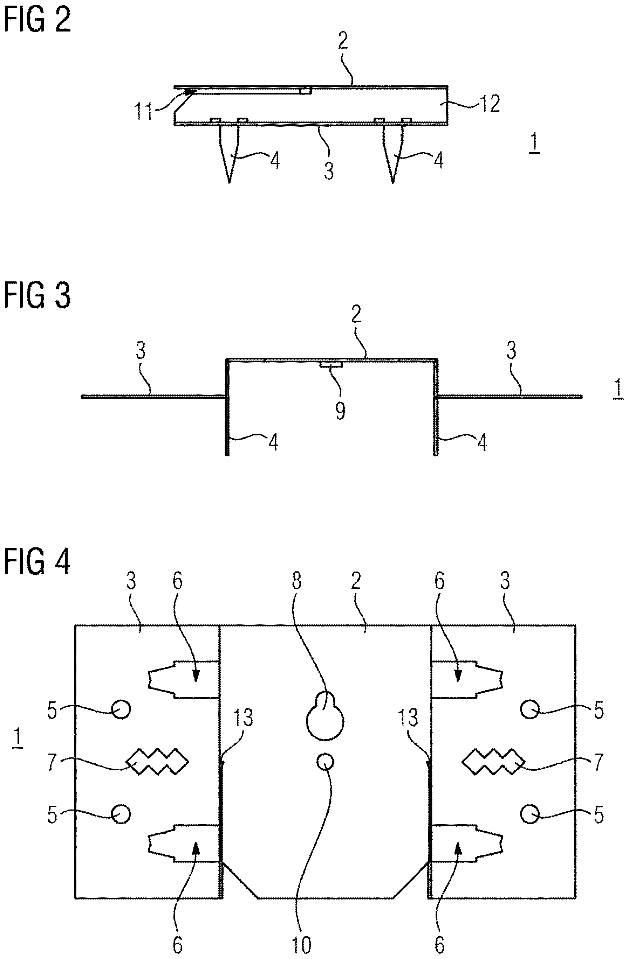

- FIG 2: shows the fastener of FIG 1 viewed from a side;
- FIG 3: shows the fastener of FIG 1 viewed from the direction of the slot;
- FIG 4: shows the fastener of FIG 1 viewed from the front;

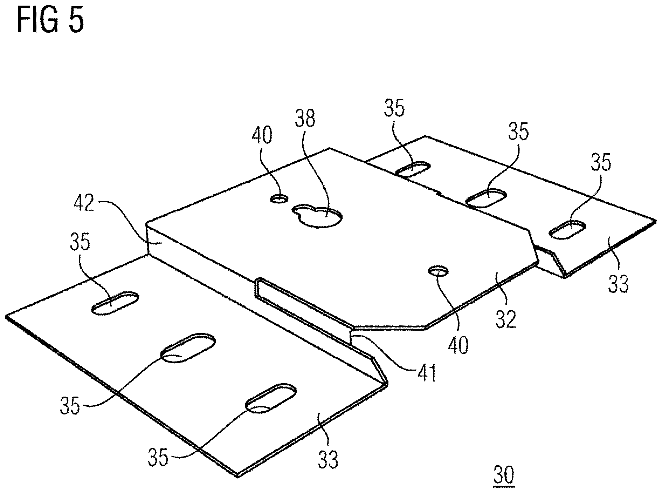

- FIG 5: shows a fastener of a second type viewed in a perspective;

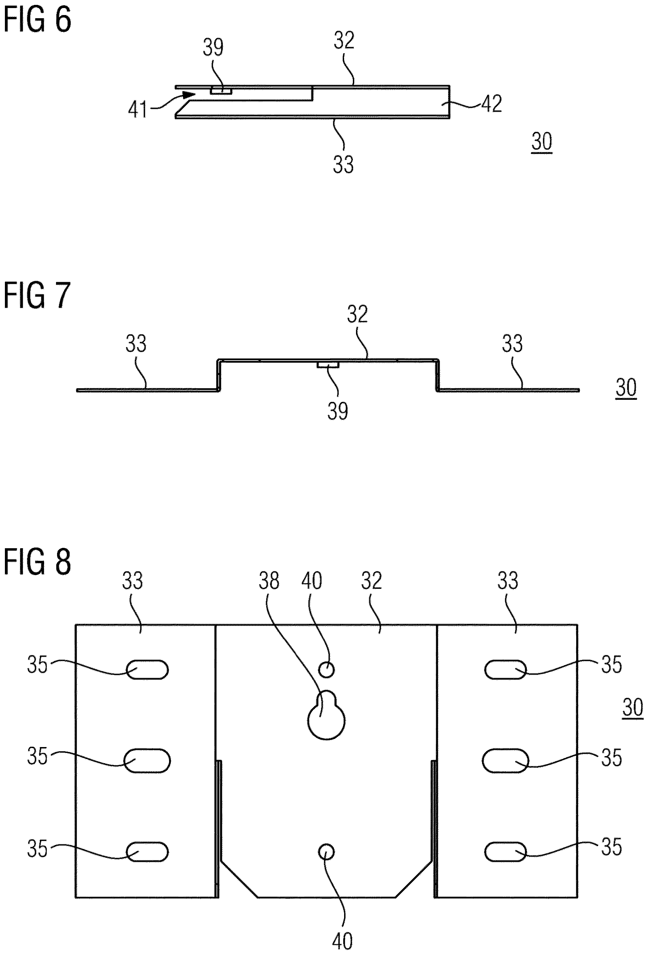

- FIG 6: shows the fastener of FIG 5 viewed from a side;
- FIG 7: shows the fastener of FIG 5 viewed from the direction of the slot;
- FIG 8: shows the fastener of FIG 5 viewed from the front;

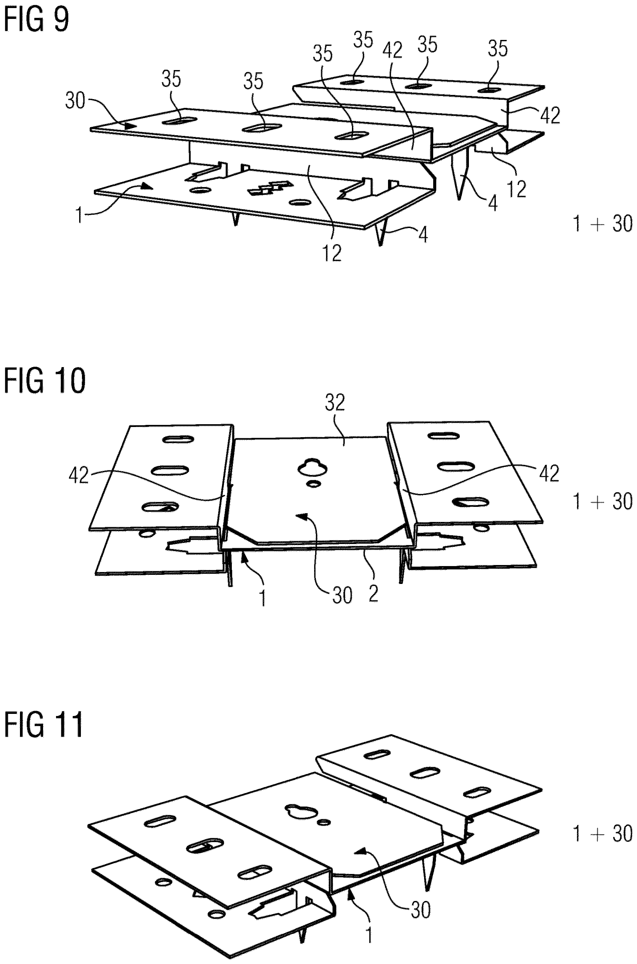

- FIG 9: shows the fastener of FIG 1 and fastener of FIG 5 assembled together, viewed from a first perspective;
- FIG 10: viewed from a second perspective, and;
- FIG 11: viewed from a third perspective;

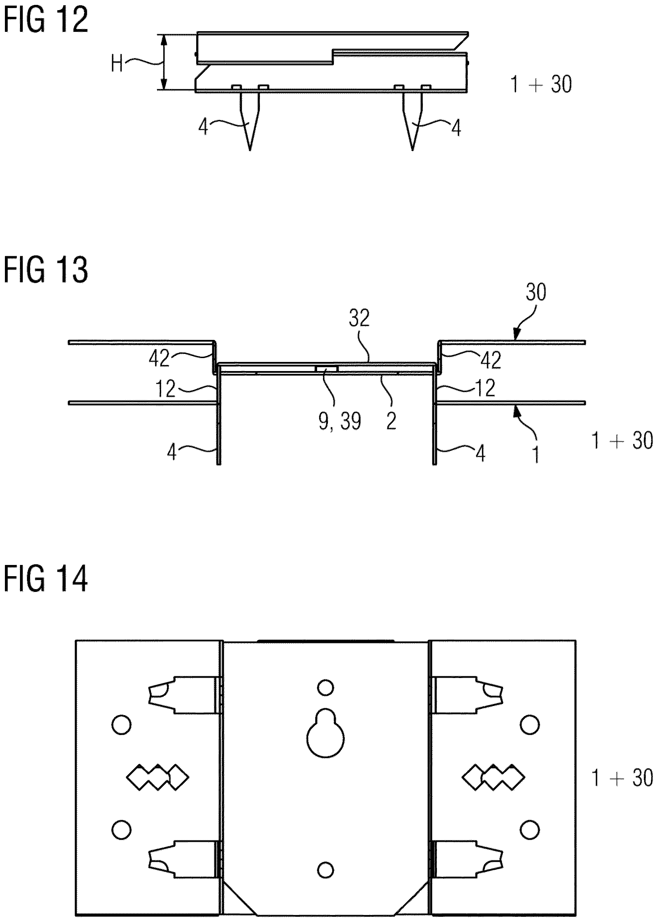

- FIG 12: shows the fasteners presented in FIG 9 assembled together, viewed from a side;
- FIG 13: shows the fasteners presented in FIG 9 viewed from above or below; and
- FIG 14: shows the fasteners presented in FIG 9 viewed from above the fastener presented in FIG 5.

The same reference numbers refer to the same technical characteristics in all FIGs.

### Detailed description of the invention

### 1. Fastener according to the invention

FIG 1 - 4 present a fastener 1 according to the invention. The fastener 1 comprises two basic parts 3 and a raising part 2 that remains between these. There is a wall 12 between the raising part 2 and both basic parts 3. There is a slot 11 between the basic parts 3 and the raising part 2.

The wall 12 restricts the slot 11. Both slots 11 have been formed between the basic part 3 and the raising part 2.

The fastener 1 further comprises a number of spikes 4 or bond teeth that extend below the basic part 3. The spikes 4 or bond teeth can be implemented easily as an extension of the wall 12, for example by machining them from the same metal sheet as the fastener 1 by using a sheet metal working machine. Such a fastener 1 is especially well suited to be fastened to a porous building board, interior panel or installation surface. The spikes 4 or bond teeth are pressed into the porous building board, interior panel or installation surface. The sharp spikes 4 or bond teeth penetrate into the porous interior panel or building board most advantageously by pressing lightly. The bond teeth or spikes 4 increase the vertical load-carrying capacity considerably and retain the installation accuracy of the fasteners 1 at the site.

Moreover, the fastener 1 may have a number of fastening holes 5 and gluing holes 7. Especially when the spikes 4 or bond teeth have been made by punching them from the same metal sheet as the fastener, the remaining openings 6 also serve as gluing holes.The raising part 2 most advantageously comprises at least one suspension hole 8.

The raising part 2 may comprise at least one arrester. The arrester has most advantageously been implemented as at least one edge squaring of a punched hole 10.

The fastener 1 fastens to a porous board or installation surface.

The fastening should be secured by fastening for example 1 - 4 screws depending on the weight and installation direction of the building board or interior panel. The screws used are most advantageously coarse thread screws.

In addition to this or as an alternative to this, the fastening can be secured chemically at the location of the bond teeth or spikes 4 for example by means of acoustic adhesive, installation adhesive or urethane adhesive. The adhesive used can be for example TyTan^{®} Euromortar (BORICA CO., LTD.'s trade mark at least within the EU). Potential teeth or notches in the spikes 4 or bond teeth and at the location of the gluing hole 7 increase the mechanical adhesion of the adhesives.

The fasteners 1, 30 can be fastened to the building boards or interior panels at the installation site or at a workshop before installation. The latter option shortens the installation time needed at the site radically.

An installation jig can be used to ensure the precise positioning of the fastener 1 to the building board or interior panel installed.

As an example, when installing Konto Oy's peat-based acoustic boards (Konto^{®} board, Konto Oy's trade mark at least in Finland), the necessary number of fasteners is 2 fasteners per 0.36 m² = 5 fasteners per m² when the installation is carried out as a ceiling installation, or 30 - 50% of this in wall installation.

The raising part 2 can comprise at least one suspension hole 8, such as a hole with the shape of a "key hole", in other words most preferably a round or oval hole, which has a rectangular protrusion or a protrusion with rounded edges, it is possible to use the raising part for the suspension of a building board or interior panel fastened to a fastener, in a way like a painting. In this case, the suspension hole 8 at the back of the fastener 1 enables the suspension of an item fastened to the fastener 1 from a wall by using a single screw (like a painting).

The fastener 1 has a lateral tolerance of 0.5 mm in positioning, which enables an adjustment margin of as much as a few millimetres of an installed building board or interior panel.

There can be a bevel 13 on the surface of the slot 11. The bevel 13 enables easy joining, when the fastener 1 is concealed behind the building board or interior panel.

### 2. Fastener of a second type

FIG 5 - 8 present a fastener 30 of a second type. The fastener 30 comprises two basic parts 33 and a raising part 32 that remains between these. There is a wall 42 between the raising part 32 and both basic parts 33. There is a slot 41 between the basic parts 33 and the raising part 32.

The wall 42 restricts the slot 41. Both slots 41 have been formed between the basic part 33 and the raising part 32.

Moreover, the fastener 30 has a number of fastening holes 35. The fastening holes 35 are most advantageously elongated.The raising part 32 most advantageously comprises at least one suspension hole 38.

The raising part 32 may comprise at least one arrester. The arrester has most advantageously been implemented as at least one edge squaring of a punched hole 40.

The lower side of the basic part 33 of the fastener 30 is essentially even, in other words it does not have spikes or bond teeth that extend below the basic part 33. 13.

Such a fastener 30 is especially well suited to be fastened to a hard board or installation surface. The fastener 30 can also be used for fastening to a porous building board, interior panel or installation surface, but in this case the fastening is most advantageously implemented by means of coarse thread screws to be installed in the fastening holes 35.

Laser alignment and/or an installation jig (mirror image of the positioning of the counter piece to the building board or interior panel fastened) is most advantageously used in installation to the installation surface.

The fastener 30 can also be fastened to the installation base by using installation adhesive for example 24 hours before installation. The adhesives used can be for example Casco^{®} superfix (Sika AG's trade mark at least within the EU) or Soudal^{®} Flexi foam (SOUDAL (naamloze vennootschap)'s trade mark at least within the EU) / Tytan^{®} Euromortar, but in this case, too, the fastening should naturally be ensured before installation.

The alignment can also be carried out by using two-sided tape on the installation surface, after which the fastener 30 is fastened by means of screws to the installation holes 35 (facilitates the use of a jig especially on the ceiling).

The gluing holes 7 of the basic parts 3, 33 of the fastener 1, 30 can be used as the middlemost screw holes, which enable a horizontal shift/alignment in installation to the installation surface.

The surface of the slot 41 can also be implemented with a bevel in the same manner as the surface of the slot 11. This enables easy joining, when the fastener 30 is concealed behind the building board or interior panel.

### 3. Fastening system

Above under item 1., it has been presented that the fastener 1 is fastened to a building board or interior panel. Similarly, above under item 2., it has been presented that the fastener 30 is fastened on a wall or ceiling. However, this is just one of many options.

The fastener system consists of two separate parts, in other words of a fastener 1 according to the invention and of a fastener 30 of a second type. The fasteners 1, 30 are most advantageously mutually compatible, in other words the potential assemblies are (fastener to be fastened to a building board / interior panel + fastener to be fastened on a wall/ceiling):
- fastener 1 + fastener 1;
- fastener 1 + fastener 30.

The mechanical and/or chemical fastening is implemented by applying that which has been presented above under items 1. and 2.

Two fasteners 1 of a first type, two fasteners 30 of a second type or one of both fasteners 1, 30 are installable to each other by sliding the raising parts 2, 32 of the fasteners, which are to be placed against each other, against each other so that the slots 1, 41 settle one inside the other. The end result is presented in FIG 9-14.

For the installation of a building board or interior panel on a wall or ceiling, a number of fasteners 1, 30 are fastened by the basic part 3, 33 to the building board or interior panel. Depending on the type of the fastener 1, 30 and on the nature of the building board or interior panel, this fastening is implemented for example by means of bond teeth or spikes 4, screws or adhesive, or a combination of these.

Moreover, a corresponding number of fasteners 1, 30 are fastened on the wall or ceiling by the basic part 3, 33. The type of the fastener 1, 30 can be selected depending on the nature of the installation surface. Depending on the type of the fastener 1, 30 and on the nature of the installation surface, this fastening is implemented for example by means of bond teeth or spikes 4, screws or adhesive, or a combination of these.

Finally, the raising part 2, 32 of the fasteners 1, 30 fastened to the building board or interior panel is installed against the raising part 2, 32 of the fasteners 1, 30 fastened on the wall or ceiling by sliding them against each other so that the slots 1, 41 in both fasteners 1, 30 go inside one another.

This enables the fastening of different types of building boards and interior panels at the same site by using the same installation series. The fastener 1, 30 leaves an empty space of a desired size (typically H = 8 - 30 mm, most advantageously 10 - 20 mm, cf. FIG 12) between the building board or interior panel and the installation surface, in which case a better or at least a more even acoustic property is achieved on the wall or ceiling surface.

The fasteners 1, 30 have unthreaded recesses/"craters" 10, 40 of for example an M4 screw, which serve as arresters so that the fasteners 1, 30 do not slide away from each other by themselves in ceiling installations.

In addition to or instead of building boards and interior panels, the fasteners 1, 30 and the fastening system can be used for suspending or installing interior modules, such as unattached backrests of a sofa onto walls or cupboards such as kitchen top cupboards onto a wall, just as long as the material thickness of the fastener is selected to be suitable for the weight of the application.

It is also possible to make square holes, such as a gluing hole 7, in a fastener 30 of a second type instead of the middlemost fastening holes 35 (longitudinal bigger in the wings), so that a similar adhesive surface is obtained in it.

One or both of the fasteners 1, 30 can also be fastened to the installation base from a tooth hole (gluing hole 7) by using a nailer.

If the fasteners 1, 30 or the fastening system are used for fastening for example metallic building boards or interior panels, it is natural to use, instead of or in addition to screws and gluing, for example spot welding for fastening the fasteners 1, 30 to a board, panel or installation base. In this way, for example an advertising sign of a restaurant can be suspended easily.

Instead of or in addition to screws, gluing and spot welding, it is possible to use rivets, such as pop rivets, for fastening the fasteners 1, 30 to a board, panel or installation base. As an example, we have tested the functioning of the fastening system for the suspension of plywood boards. This succeeded very well, when the fastening was carried out by using pop rivets.

## Claims

1. A fastener (1), which comprises: two basic parts (3) and they are on the opposite sides of one raising part (2), where slots (11) have been arranged between both basic parts (3) and the raising part (2), **characterized in that** the fastener (1) further comprises a number of spikes (4) or bond teeth that extend below the basic part (3).

2. A fastener (1) according to claim 1, **where:** the raising part (2) comprises at least one suspension hole (8).

3. A fastener (1) according to any one of the claims 1-2, **where:** the raising part (2) comprises at least one arrester.

4. A fastener (1) according to claim 3, **where:** the arrester has been implemented as at least one edge squaring of a punched hole (10) .

5. A fastener (1) according to any one of the preceding claims, **where:** there is a wall (12) between the basic part (3) and the raising part (2).

6. A fastener (1) according to claim 5, **where:** the wall (12) restricts the slot (11).

7. A fastener (1) according to any one of the preceding claims, **where** the basic part (3) contains a number of gluing holes (6; 7) .

8. A fastener (1) according to any one of the preceding claims, **wh**ich fastener has been manufactured from a single sheet metal piece by using sheet metal working methods.

9. A fastening system, comprising two fasteners (1) according to any one of the claims 1 - 8 which are installable to each other by sliding the raising parts (2) of the fasteners (1), which are to be placed against each other, against each other so that the slots (1) go one inside the other.

10. A fastening system, comprising two fasteners (1) one according to any one of the claims 1 - 8 and another second fastener (30), which comprises two basic parts (33) and they are on the opposite sides of one raising part (32), where slots (11) have been arranged between both basic parts (33) and the raising part (32), which are installable to each other by sliding the raising parts (2, 32) of the fasteners (1,30), which are to be placed against each other, against each other so that the slots (1, 11) go one inside the other.

11. A method for the installation of a building board or interior panel on a wall or ceiling, **in which method:**
- at least one fastener (1) according to any one of the preceding claims 1 - 8 is fastened to the building board or interior panel by the basic part (3);
- a corresponding number of fasteners (1, 30) according to any one of the preceding claims 1 - 8 or a fastener (30), which comprises two basic parts (33) and they are on the opposite sides of one raising part (32), between which slots (11) has been arranged between both basic parts (33) and the raising part (32)are fastened on the wall or ceiling by the basic part (3, 33);
- the raising part (2) of the fasteners (1) fastened to the building board or interior panel is installed against the raising part (2, 32) of the fasteners (1, 30) fastened on the wall or ceiling by sliding them against each other so that the slots (1, 41) in both fasteners (1, 30) go inside one another.

## Patentansprüche

1. Befestigungsmittel (1), das folgendes umfasst: zwei Grundteile (3) und diese sind an den gegenüberliegenden Seiten eines erhöhten Teils (2), wo Einschnitte (11) angeordnet worden sind zwischen beiden Grundteilen (3) und dem erhöhten Teil (2), **dadurch gekennzeichnet, dass** das Befestigungsmittel (1) außerdem eine Anzahl von Dornen (4) oder Verbindungszähnen umfasst, die sich unter den Grundteil (3) erstrecken.

2. Befestigungsmittel (1) nach Anspruch 1, **in dem:** der erhöhte Teil (2) mindestens ein Aufhängungsloch (8) umfasst.

3. Befestigungsmittel (1) nach einem der Ansprüche 1 - 2, **in dem:** der erhöhte Teil (2) mindestens eine Arretierung umfasst.

4. Befestigungsmittel (1) nach Anspruch 3, **in dem:** die Arretierung als mindestens ein Kantenbeschnitt eines gestanzten Loches (10) ausgeführt ist.

5. Befestigungsmittel (1) nach einem der vorhergehenden Ansprüche, **in dem:** es eine Wand (12) gibt zwischen dem Grundteil (3) und dem erhöhten Teil (2).

6. Befestigungsmittel (1) nach Anspruch 5, **in dem:** die Wand (12) den Einschnitt (11) beschränkt.

7. Befestigungsmittel (1) nach einem der vorhergehenden Ansprüche, **in dem** der Grundteil (3) eine Anzahl von Klebelöchern (6; 7) enthält.

8. Befestigungsmittel (1) nach einem der vorhergehenden Ansprüche, **wobei** das Befestigungsmittel durch Anwendung von Bearbeitungsverfahren für Metallblech aus einem einzigen Stück Metallblech hergestellt worden ist.

9. Befestigungssystem, das zwei Befestigungsmittel (1) nach einem der Ansprüche 1 - 8 umfasst, die miteinander verbaut werden können, indem die erhöhten Teile (2) der Befestigungsmittel (1), die gegeneinander platziert werden sollen, gegeneinander geschoben werden, so dass die Einschnitte (1) einer in den anderen gleitet.

10. Befestigungssystem, das zwei Befestigungsmittel (1) umfasst, eines nach einem der Ansprüche 1 - 8 und ein anderes, zweites Befestigungsmittel (30), das zwei Grundteile (33) umfasst und die sich an gegenüberliegenden Seiten eines erhöhten Teils (32) befinden, wo Einschnitte (11) angeordnet worden sind zwischen beiden Grundteilen (33) und dem erhöhten Teil (32), die miteinander verbaut werden können, indem die erhöhten Teile (2, 32) der Befestigungsmittel (1, 30), die gegeneinander platziert werden sollen, gegeneinander geschoben werden, so dass die Einschnitte (1, 11) einer in den anderen gleitet.

11. Verfahren zum Verbauen einer Bauplatte oder eines Innenpaneels an einer Wand oder Decke, **in dem Verfahren:**
- mindestens ein Befestigungsmittel (1) nach einem der vorhergehenden Ansprüche 1 - 8 durch den Grundteil (3) an der Bauplatte oder dem Innenpaneel befestigt wird;
- eine entsprechende Anzahl von Befestigungsmitteln (1, 30) nach einem der vorhergehenden Ansprüche 1 - 8 oder ein Befestigungsmittel (30), das zwei Grundteile (33) umfasst und diese sich an gegenüberliegenden Seiten eines erhöhten Teils (32) befinden, zwischen dem Einschnitte (11) angeordnet wurden zwischen den beiden Grundteilen (33) und dem erhöhten Teil (32) durch den Grundteil (3, 33) an der Wand oder Decke befestigt werden;
- der erhöhte Teil (2) der Befestigungsmittel (1) an der Bauplatte oder dem Innenpaneel befestigt wurde, mit dem erhöhten Teil (2, 32) der Befestigungsmittel (1, 30) verbaut wurde, der an der Wand oder der Decke befestigt wurde, indem sie gegeneinander geschoben wurden, so dass die Einschnitte (1, 41) in beiden Befestigungsmitteln (1, 30) ineinander gleiten.

## Revendications

1. Fixation (1) comprenant : deux éléments de base (3) situés de part et d'autre d'un élément surélevé (2), dans lequel des fentes (11) ont été disposées entre les deux éléments de base (3) et l'élément surélevé (2), **caractérisée en ce que** ladite fixation (1) comprend en outre un certain nombre de pointes (4) ou de dents de liaison qui traversent l'élément de base (3).

2. Fixation (1) selon la revendication 1, **dans laquelle** : l'élément surélevé (2) comprend au moins un trou de suspension (8) .

3. Fixation (1) selon l'une quelconque des revendications 1 à 2, **dans laquelle** l'élément surélevé (2) comprend au moins un dispositif d'arrêt.

4. Fixation (1) selon la revendication 3, **dans laquelle** : le dispositif d'arrêt a été mis en œuvre sous la forme d'au moins un trou découpé à l'emporte-pièce (10).

5. Fixation (1) selon l'une quelconque des revendications précédentes, **dans laquelle** : une paroi (12) est placée entre l'élément de base (3) et l'élément surélevé (2).

6. Fixation (1) selon la revendication 6, **dans laquelle** : la paroi (12) restreint la fente (11).

7. Fixation (1) selon l'une quelconque des revendications précédentes, **dans laquelle** : l'élément de base (3) contient un certain nombre de trous de collage (6, 7).

8. Fixation (1) selon l'une quelconque des revendications précédentes, laquelle fixation a été fabriquée à partir d'une pièce de tôle métallique unique à l'aide de procédés d'usinage de tôle.

9. Dispositif de fixation comprenant deux fixations (1) selon l'une quelconque des revendications 1 à 8, pouvant être installées l'une sur l'autre en faisant glisser les éléments surélevés (2) desdites fixations (1), qui doivent être placées l'une contre l'autre, de manière à ce que les fentes (1) s'emboîtent l'une dans l'autre.

10. Dispositif de fixation comprenant deux fixations (1) selon l'une quelconque des revendications 1 à 8 et une autre fixation (30), comprenant deux éléments de base (33) situés de part et d'autre d'un élément surélevé (32), dans laquelle des fentes (11) ont été disposées entre les deux éléments de base (33) et l'élément surélevé (32), pouvant être installées l'une sur l'autre en faisant glisser les éléments surélevés (2, 32) desdites fixations (1, 30), qui doivent être placées l'une contre l'autre, de manière à ce que les fentes (1, 11) s'emboîtent l'une dans l'autre.

11. Procédé d'installation d'un panneau de construction ou d'une paroi intérieure sur un mur ou un plafond, dans lequel :
- au moins une fixation (1) selon l'une quelconque des revendications 1 à 8 est fixée au panneau de construction ou à la paroi intérieure par l'élément de base (3) ;
- un nombre corresponsant de fixations (1, 30) selon l'une quelconque des revendications 1 à 8 ou une fixation (30), comprenant deux éléments de base (33) situés de part et d'autre d'un élément surélevé (32) dans laquelle des fentes (11) ont été disposées entre les deux éléments de base (33) et l'élément surélevé (32), sont fixées sur un mur ou un plafond par l'élément de base (3, 33) ;
- l'élément surélevé (2) des fixations (1) fixées au panneau de construction ou à la paroi intérieure est installé contre l'élément surélevé (2, 32) des fixations (1, 30) fixées sur le mur ou le plafond en les faisant glisser l'une sur l'autre de manière à ce que les fentes (1, 41) des deux fixations (1, 30) s'emboîtent l'une dans l'autre.
